# EUROPÄISCHE PATENTANMELDUNG

(11) **EP 4 582 402 A1**
(43) Veröffentlichungstag der Anmeldung: **09.07.2025**
(21) Anmeldenummer: 24219284.7
(22) Anmeldetag: 12.12.2024
(51) Int. Cl.: C04B 35/626, C04B 35/10, C04B 35/14, C04B 35/46, C04B 35/48, C04B 35/505, C04B 35/563, C04B 35/565, C04B 35/581, C04B 35/583, C04B 35/584, C04B 35/597, C04B 35/632, C04B 35/634

(54) **SCHLICKER**

(30) Priorität: 03.01.2024 DE 102024100115
(71) Anmelder: Karlsruher Institut für Technologie, 76131 Karlsruhe (DE)
(72) Erfinder: Schubert, Johannes, 69168 Wiesloch (DE); Brenneis, Jonas, 68535 Edingen-Neckarhausen (DE); Schöner, Sandro, 52428 Jülich (DE); Zanger, Frederik, 76327 Pfinztal (DE); Schulze, Volker, 76344 Leopoldshafen (DE)

(57) **Zusammenfassung**

Schlicker, umfassend ein Pulver aus einem anorganischen Werkstoff oder einer anorganischen Werkstoffmischung, einen Binder, einen Polymerisationsinitiator sowie einen Co-Initiator. Die Aufgabe besteht darin, einen Schlicker mit möglichst hohem Füllstoffanteil und gleichzeitig hinreichend niedriger Viskosität und gutem Aushärteverhalten vorzugschlagen. Die Aufgabe wird dadurch gelöst, dass der Polymerisationsinitiator ein Photoinitiator ist sowie der Schlicker einen Pulver-Füllstoffanteil zwischen 45 und 75 Vol.% mit einer Partikelgrößenverteilung bezogen auf den jeweiligen Perzentilwert d50 zwischen 0,05 und 20 µm aufweist.

## Beschreibung

Die Erfindung betrifft einen Schlicker mit einem Keramik- oder Metallpulver sowie ein Verfahren zur Herstellung eines solchen Schlickers gemäß der Patentansprüche 1 bzw. 16.

Ein eingangs genannter Schlicker ist eine Suspension; er besteht aus einem Pulver aus einem anorganischen Werkstoff oder einer anorganischen Werkstoffmischung (Füllstoff), einem Binder, einem Polymerisationsinitiator, einem Co-Initiator sowie einem Lösungsmittel zur Einstellung einer Viskosität. Üblicherweise verstärkt ein Co-Initiator die Wirkung des Polymerisationsinitiators. Schlicker sind in der Pulvermetallurgie für die Herstellung von ungesinterten metallischen oder keramischen Formkörpern (Grünkörpern) mittels Gussverfahren mit anschließender Entfernung, Verfestigung oder Umwandlung des Lösungsmittels, dem sog. Schlickerguss, als Halbzeuge für eine weitere Verarbeitung mittels eines Entbinderungs- und Sinterprozesses zu einem fertigen pulvermetallurgischen Bauteil ein eingeführtes Zwischenprodukt.

Beispielhaft wird in der EP 0 413 456 B1 ein Verfahren offenbart, nach dem keramisches, Siliziumcarbid (SiC) enthaltendes Pulver in Ethanol suspendiert, gegebenenfalls feiner gemahlen und gesiebt wird. Anschließend wird das Ethanol ausgetrieben und das so erhaltene Pulver zu einem Grünkörper gepresst und anschließend unter Sauerstoffatmosphäre gesintert.

Aus der DE 10 335 224 A1 ist ferner ein Verfahren zur Herstellung eines Formkörpers aus keramischem Material bekannt, indem ein Metalloxidpulver und ein Metallpulver in einem kolloidalen Sol zu Schlicker verrührt werden und dieser Schlicker sodann in einer Form zu einem Grünkörper, insbesondere durch Gefriergelieren, konsolidiert und schließlich der Grünkörper in aktiver, ein Oxidieren des Metallpulvers ermöglichender Atmosphäre zu dem Formkörper gesintert wird.

Ebenso ist aus der DE 10 2017 203 885 A1 eine keramische Suspension bekannt, umfassend, ein Lösungsmittel oder Lösungsmittelgemisch, ein Dispergiermitttel, ein nicht funktionalisiertes Keramikpulver, ein monofunktioneller Binder, ein multifunktioneller Binder als Vernetzer sowie einen Polymerisationsinitiator. Auch hier wird das Lösungsmittel, bevorzugt ein verzweigter oder linearer, einwertiger oder mehrwertiger aliphatischer Alkohol, vorgeschlagen.

Ein zunehmend bedeutendes Anwendungsgebiet des vorgeschlagenen Schlickers bieten additive Fertigungsverfahren (engl. Additive Manufacturing, kurz AM) von Bauteilen und Strukturen aus anorganischen Werkstoffen wie Keramiken, aber auch Metallen, wobei der Schlicker beispielsweise schichtweise auf ein Substrat gedruckt wird (3D-Druckverfahren).

Eines dieser additiven Fertigungsverfahren ist die badbasierte Photopolymerisation (engl. Vat Photopolymerization, kurz VPP), bei dem ein Schlicker, eine Suspension aus Keramik- oder Metallpartikeln und einem Bindersystem, mittels Licht einer definierten Wellenlänge ortsselektiv ausgehärtet und dadurch das Bauteil aufgebaut wird. Die Erfindung umfasst konkret eine neue Rezeptur für einen VPP-Schlicker mit verbesserten Eigenschaften sowie damit verbunden auch ein Verfahren zur Herstellung eines solchen Schlickers.

Charakteristisch bei einer solchen Anwendung ist ein mehrstufiges additives Fertigungsverfahren, bei dem Werkstoff, aus dem das spätere Bauteil bestehen soll, zunächst als Schlicker in einer AM-Anlage, beispielsweise durch den Druckprozess, in Form gebracht wird, wobei flüssige Schlickerbestandteile wie das Lösungsmittel entfernt und/oder der Binder durch chemische Reaktion oder sonstige Umwandlung verfestigt werden. Dadurch entsteht ein Grünkörper, der durch den Binderanteil eine für die weitere Verarbeitung oder auch für eine spangebende Formgebung erforderliche Formstabilität aufweisen muss. In einem nachfolgenden Entbinderungsschritt wird der Binder und/oder das Lösungsmittel chemisch oder thermisch aus dem Grünkörper entfernt; es entsteht ein entbinderter Braunkörper. Dieser wird anschließend gesintert, wobei es zu diffusionsgetriebenen Umlagerungen im Braunkörper kommt. Der Braunkörper wird damit weiter verdichtet, schrumpft und nimmt als fertiges Bauteil oder Struktur seine endgültige Form, Dichte und charakteristischen Eigenschaften ein.

Damit beim Entbindern und Sintern der Bauteile möglichst wenige, idealerweise keine, Defekte im Bauteil entstehen, ist ein möglichst hoher Füllstoffanteil im Schlicker erstrebenswert. Zusätzlich wird die realisierbare Bauteildicke aufgrund des notwendigen Entbinderungsschritts limitiert, da der Binder bzw. dessen Zersetzungsprodukte bei der Entbinderung aus dem Bauteil entweichen müssen. Durch einen höheren Füllstoffanteil soll das Entbinderungsverhalten verbessert und damit dickwandigere Bauteile realisierbar werden. Gleichzeitig muss eine hinreichend gute Aushärtung sowie eine niedrige Viskosität des Schlickers zur Verarbeitung im VPP-Prozess sichergestellt werden. Dies sind an sich widersprüchliche Ziele.

Schlicker sind Suspensionen, die keramische bzw. metallische Füllstoffanteile in der Größenordnung von 50 % Volumenanteil aufweisen. Die verbleibenden 50 % bestehen aus einem meist organischen Bindersystem und dem Lösungsmittel zur Einstellung der Viskosität. Schlicker als solche sind somit nicht formstabil; sie müssen verfestigt werden. Der vergleichsweise hohe Anteil des Bindersystems ist auf zwei Sachverhalte bzw. Anforderungen zurückzuführen: Zum einen führt ein höherer Feststoffgehalt, d.h. Metall- oder Keramikpartikel, zu einer höheren Viskosität der Suspension; zum anderen wird durch einen höheren Feststoffgehalt das Aushärteverhalten der Suspension verschlechtert. Um das dem Druckprozess nachfolgende Entbindern und Sintern zu beschleunigen und die Prozesssicherheit (Vermeidung von Defekten etc.) zu steigern, wird ein möglichst hoher Füllstoffanteil angestrebt.

Bei der Herstellung eines Schlickers muss eine gute Homogenität im Schlicker sichergestellt werden. Zusätzlich gilt es, das Mischen so effizient wie möglich durchzuführen, wobei eine thermische Schädigung des Schlickers durch zu hohe Mischintensitäten und zu lange Mischzeiten verhindert werden muss.

Durch die Zusammensetzung eines herkömmlichen Schlickers ist der Füllstoffanteil in diesem begrenzt, bei herkömmlichen Systemen beispielsweise mit Al₂O₃ als Füllstoff auf ca. maximal 50 Vol.%. Das Lösungsmittel, bei dem es sich um einen oder mehrere polare oder unpolare Stoffe mit niedrigem Siedepunkt bzw. hoher Flüchtigkeit und niedriger Viskosität, vorzugsweise ein verzweigter oder linearer, einwertiger oder mehrwertiger aliphatischer Alkohol, handelt, dient lediglich der Einstellung der Schlickerviskosität und verbessert die Mischbarkeit signifikant, ist aber ansonsten an der Aushärtungsreaktion nicht beteiligt.

Bei herkömmlichen Systemen ist insbesondere für die Einstellung der Viskosität des Schlickers Lösungsmittel erforderlich. Das Lösungsmittel reduziert damit auch den maximal möglichen und eine anzustrebende Formstabilität fördernden Füllstoffanteil im Schlicker, ohne an der Reaktion zum fertigen Bauteil beteiligt zu sein. Damit erhöht sich aber auch das Risiko von Bauteildefekten, die insbesondere bei einer Entbinderung entstehen.

Die Anforderungen an einen Schlicker, der sich für ein additives Fertigungsverfahren wie das vorgenannte VPP-Verfahren eignet, beziehen sich jedoch nicht nur auf eine gute Mischbarkeit, sondern insbesondere auch auf andere Eigenschaften wie eine gute Aushärtbarkeit und eine möglichst hohe Formstabilität auch bei größeren Volumina dabei.

Davon ausgehend liegt eine **Aufgabe der Erfindung** darin, einen Schlicker mit möglichst hohem Füllstoffanteil und gleichzeitig hinreichend niedriger Viskosität und gutem und homogenen Aushärteverhalten vorzugschlagen, der die vorgenannten Nachteile und Einschränkungen nicht oder nur reduziert aufweist.

Eine weitere Aufgabe liegt darin, ein Verfahren zur Herstellung eines solchen Schlickers vorzuschlagen.

Die Aufgabe wird mit einem Schlicker mit Merkmalen des ersten sowie einem Verfahren mit Merkmalen des 16. Anspruchs gelöst. Auf diese rückbezogene Unteransprüche geben vorteilhafte Ausgestaltungen des Schlickers und des Verfahrens wieder.

Zur Lösung der Aufgabe wird ein **Schlicker** vorgeschlagen, der grundsätzlich ohne eine Zumischung eines Lösungsmittels auskommt und sich dennoch für eine Verwendung für ein additives Fertigungsverfahren, insbesondere dem eingangs genannten VPP-Verfahren, eignet, indem er die erforderliche niedrige Viskosität aufweist. Vorgeschlagen wird ein Schlicker, umfassend ein Pulver aus einem anorganischen Werkstoff oder einer anorganischen Werkstoffmischung, einen Binder, einen Polymerisationsinitiator sowie einen Co-Initiator. Vorzugsweise besteht der Schlicker nur aus dem genannten Pulver, dem Binder, dem Polymerisationsinitiator sowie dem Co-Initiator Wesentlich ist, dass der Polymerisationsinitiator ein Photoinitiator ist sowie das Pulver einen Füllstoffanteil zwischen 45 Vol.%, bevorzugt 50 Vol.% oder weiter bevorzugt 55 Vol.% und 75 Vol.%, bevorzugt 70 Vol.% oder weiter bevorzugt 65 Vol.% mit einer Partikelgrößenverteilung bezogen auf den jeweiligen Perzentilwert d50 zwischen 0,05 und 20 µm aufweist. Es wird insbesondere eine Partikelgrößenverteilung vorgeschlagen, deren Verhältnis von größtem zu kleinstem Wert zwischen kleinstem und größtem Wert eine Spanne vom Faktor bis zu 400 aufspannt und somit einen hohen Füllstoffanteil insbesondere bis zu 75%, bevorzugt aber den vorgenannten Bereich zwischen 45 und 75%, weiter bevorzugt aber einen Füllstoffanteil größer gleich oder größer 50% bis hin zu 65 oder 75% möglich macht, und zwar als Schüttung, ohne dass hierfür eine Komprimierung des Füllstoffs erforderlich wäre. Daher kommt der grundsätzlich fehlende Anteil an Lösungsmittel einem höheren Anteil an Feststoff zugute. Ferner muss der Schlicker schon ohne ein Lösungsmittel eine für eine Verarbeitung erforderliche niedrige Viskosität aufweisen. Dies bedeutet im Umkehrschluss, dass für eine Verfestigung des Schlickers hin zum Grünkörper der aus herkömmlichen Technologien bekannte Entzug oder Umwandlung von Lösungsmittelanteilen mangels deren nicht zur Verfügung steht. Dieser fehlende Verfestigungsmechanismus wiederum wird dadurch ausgeglichen, dass der Polymerisiationinitiator durch einen Photoinitiator gebildet ist, der zumindest die für Licht zugänglichen Oberflächen des Grünkörpers für dessen mechanische Stabilisierung nutzbar ist.

Ein Photoinitiator als Polymerisationsinitiator setzt bei Belichtung freie Radikale aus, die dann die Vernetzungsreaktion mit den Monomeren in Gang setzen.

Die gestellte Aufgabe wird folglich durch eine optimierte Auswahl und Zusammenstellung und Abstimmung der Suspensionsbestandteile gelöst, wobei ein Verzicht eines Lösungsmittels einerseits und ein erhöhter Füllstoffanteil in der Suspension (Schlicker) andererseits vorgeschlagen wird. Eine Verwendung eines Co-Initiators dient der Verbesserung der Aushärtung. Eine optional vorzugsweise vorgeschlagene Einbindung von mono-, di- und höherfunktionellen Monomeren unterschiedlicher Funktionalität, d.h. unterschiedlicher Anzahl an funktionellen Gruppen, insbesondere Mehrfach- bzw. Doppelbindungen, bevorzugt von Hydroxyethylmethacrylat (HEMA), Isobornylacrylat (IBOA), Hexandioldiacrylat (HDDA), Tetraethylenglykoldiacrylat (TEGDA), Tripopylene Glycol Diacrylate (TPGDA), Trimethylolpropantriacrylat (TMPTA),ethoxyliertem Trimethylolpropantriacrylat (ETMPTA), dienen der weiteren Viskositätsreduktion und verbessern weiter die Aushärtung. Der Effekt durch die Kombination verschiedener Funktionalitäten wird auf eine erhöhte Mobilität der freien Radikale und Doppelbindungen bei gleichzeitig niedriger Volumenschrumpfung zurückgeführt. Der Schlicker enthält insbesondere keine aciden Monomere, z.B. Acryl- oder Methacrylsäure.

Mit Pulvermischungen, insbesondere wenn die Partikel in einem Partikelgrößenverhältnis bezogen auf den jeweiligen Perzentilwert d50 zwischen 1:1,5, vorzugsweise 1:3, und 1:150, vorzugsweise 1:50, stehen, als Füllstoff oder Füllstoffbestandteile lassen sich die Viskosität des Schlickers beeinflussen und ein Lösungsmittel substituieren. Durch Kombination verschiedener monolithischer Werkstoffpulver lassen sich darüber hinaus die Bauteileigenschaften modifizieren. Der Co-Initiator dient der weiteren Verbesserung der Aushärtung des Binders bei der Herstellung des Grünkörpers und damit unterstützend zum hierfür vorgesehenen Polymerisationsinitiator.

Eine bevorzugte Ausführungsform des Schlickers sieht einen Polymerisationsinitiator vor, der ein Camph-Derivat, vorzugsweise Campherchinon oder mindestens ein Naphtalin-Derivat oder eine Mischung davon ist oder umfasst. Die Auswahl erfolgt in Abhängigkeit der Wellenlänge des einzusetzenden Lichts für eine entsprechende Aushärtung sowie der Monomere des Binders.

Eine weitere bevorzugte Ausführungsform des Schlickers sieht einen Co-Initiator vor, bestehend oder umfassend aus der Gruppe der Amine, Benzoate, Nitrile, Phenole, Glycine, vorzugsweise ein Ethyl-4-Dimethylamino Benzoat, 4-Dimethylamino-Benzonitril oder N-Phenylglycin, wodurch die Aushärtung beschleunigt und intensiviert werden kann.

Eine weitere bevorzugte Ausführungsform des Schlickers umfasst ein Additiv zur Anpassung der Eigenschaften des Schlickers, insbesondere hinsichtlich seiner Rheologie und der Sedimentation. Eine Ausgestaltung hierzu sieht vor, dass das Additiv modifizierten Harnstoff und/oder Polyalkylemin und/ oder Polycarbonsäurepolymer und/ oder Alkylammoniumsalz eines sauren Copolymers und/oder Salz eines ungesättigten Polyaminamiden und/oder Phosphorsäure und/oder Styrol-Maleinsäureanhydrid-Copolymer, bevorzugt Phosphorsäureester und/ oder hydroxyfunktionelles Alkylammoniumsalz eines sauren Copolymers, umfasst. Dadurch können die Pulverpartikel im Schlicker, insbesondere aufgrund von Abstoßungseffekten durch Ladungsunterschiede, stabilisiert und eine Sedimentation verhindert oder zumindest verlangsamt werden.

Eine weitere bevorzugte Ausführungsform des Schlickers sieht einen aus einer Mischung von mono-, di- oder multifunktionellen Monomeren zusammensetzten Binder vor, wobei weiter bevorzugt das Massenverhältnis von mono-, di- oder multifunktionellen Monomeren zwischen 5:1:1, 1:5:1 zu 1:1:5, vorzugsweise zwischen 2:1:1, 1:2:1 zu 1:1:2, weiter bevorzugt 2:2:1 beträgt. Sie dienen insbesondere der Viskositätsreduktion und Verbesserung der Aushärtung. Diese Verbesserung äußert sich z.B. in einem überproportional starken Anstieg des Speichermoduls des Schlickers nach der Aushärtung im Vergleich zu keinem oder nur einem moderaten Anstieg der Viskosität im unausgehärteten Zustand im Vergleich zu aus dem Stand der Technik bekannten Schlickern. Dieser Effekt wird auf eine erhöhte Mobilität der freien Radikale und Doppelbindungen bei gleichzeitig niedriger Volumenschrumpfung durch die Mischung von Monomeren unterschiedlicher Funktionalität zurückgeführt. Weiter bevorzugt wird dabei vorgeschlagen, dass
a) das monofunktionelle Monomer monofuktionelle (Meth-) Acrylate, bevorzugt Hydroxyethylmethacrylat (HEMA) oder Isobornylacrylat (IBOA) ist oder umfasst, und/oder
b) das difunktionelle Monomer difunktionelle (Meth-) Acrylate, bevorzugt Hexandioldiacrylat (HDDA), Tetraethylenglykoldiacrylat (TEGDA) oder Tripopylene Glycol Diacrylate (TPGDA) ist oder umfasst, und/oder
c) das multifunktionelle Monomer tri- oder tetrafunktionelle (Meth-)Acrylate, bevorzugt Trimethylolpropantriacrylat (TMPTA) oder ethoxyliertes Trimethylolpropantriacrylat (ETMPTA) ist oder umfasst.

Monofunktionelle Monomere zeichnen sich allgemein dadurch aus, dass sie nur eine funktionelle Gruppe und eine im Vergleich zu höherfunktionellen Monomeren niedrige Viskosität aufweisen. Sie sorgen für eine hohe Mobilität der freien Radikale, die bei Belichtung durch den Photoinitiator entstehen, und reduzieren im Vergleich zu höherfunktionellen Monomeren die Viskosität; ein zu hoher Anteil sorgt aber für ein zu vergleichsweises geringeres Vernetzungsverhalten; sie können durch die eher schwache Vernetzung auch die Sprödigkeit der Grünteile reduzieren, was z.B. auch für einen Druckprozess wichtig ist.

Difunktionelle Monomere weisen zwei funktionelle Gruppen auf. Die Viskosität ist höher als bei monofunktionellen- aber niedriger als bei multifunktionellen Monomeren. Sie härten stärker bzw. fester aus als monofunktionelle Monomere, aber weniger stark als multifunktionelle Monomere.

Multifunktionelle Monomere umfassen mindestens drei funktionelle Gruppen. Die Viskosität ist im Vergleich zu den mono- und difunktionellen Monomeren hoch, was wiederum den maximal möglichen Feststoffanteil in multifunktionelle Monomeren signifikant begrenzt. Multifunktionelle Monomere härten am stärksten aus und/oder sorgen aufgrund der mehreren funktionellen Gruppen für eine Vernetzung der einzelnen Ketten zu einem Netz. Gleichzeitig ist die Mobilität der freien Radikale limitiert, sodass alleine durch ein multifunktionelles Monomer nicht die besten Vernetzungseigenschaften erzielt werden. Grundsätzlich ist die Vernetzung aber vergleichsweise stark und bei reinen multifunktionellen Monomeren spröde. Aufgrund der starken Vernetzung als dichtes Netz ist auch ein schlechtes Entbinderungsverhalten zu erwarten.

Erst durch die Mischung von Monomeren unterschiedlicher Funktionalität können die Vernetzungseigenschaften verbessert, die Viskosität reduziert und der Füllstoffanteil gesteigert werden; zusätzlich kann die Stärke der Vernetzung damit gezielt eingestellt und optimiert werden, sodass auch eine gute Entbinderung möglich ist. Durch Monomermischung werden auch deutlich bessere Ergebnisse erzielt als bei einem difunktionellen Monomer alleine.

Eine weitere bevorzugte Ausführungsform des Schlickers sieht vor, dass das Pulver als Füllstoff oder Füllstoffanteil aus einer nicht funktionalisierten Oxid- oder Nichtoxidkeramik oder aus einer Mischung dieser mit oder ohne Sinteradditive besteht. Dies bedeutet, dass die Pulveroberfläche vor der Einbindung in den Schlicker nicht durch einen Behandlungsschritt insbesondere thermisch, chemisch, mechanisch oder auf sonstiger Weise in der Oberflächenbeschaffenheit oder chemischen Affinität modifiziert oder verändert wurde. Durch eine geeignete Zusammensetzung des Schlickers können so aufwendige Vorbehandlungsschritte des Pulvers entfallen. Das Pulver besteht dabei vorzugsweise überwiegend aus Al₂O₃, ZrO₂, Y₂O₃, SiO₂, TiO₂, Si₃N₄, SiC, TiN, BC, AlN, Si₃N₄, BN, SiAlON oder einer Mischung dieser oder Mischoxide, -karbide oder -nitride.

Eine weitere bevorzugte Ausführungsform des Schlickers sieht vor, dass das Pulver eine Pulvermischung mit zwei Pulverfraktionen (bimodale Partikelgrößenverteilung) umfasst, die zueinander in einem Partikelgrößenverhältnis bezogen auf den jeweiligen Perzentilwert d50 zwischen 1:1,5, vorzugsweise 1:3, und 1:150, vorzugsweise 1:50, stehen. Ein Perzentilwert mit einer Zahl zwischen 0 und 100 gibt den Wert bezogen auf die Menge 100% an Einzelwerten an, bei dem die geordneten Einzelwerte in zwei Gruppen unterteilt werden, sodass ein bestimmter Prozentsatz entsprechend der genannten Zahl zwischen 0 und 100 darüber und ein zu 100 verbleibender Prozentsatz darunter liegt.

Eine weitere bevorzugte Ausführungsform des Schlickers sieht vor, dass das Pulver eine Pulvermischung mit drei Pulverfraktionen (trimodale Partikelgrößenverteilung) umfasst, die in einem Partikelgrößenverhältnis bezogen auf die jeweiligen Perzentilwerte d50 der Äquivalenzdurchmesser der Partikel von 1:5:25 bis 1:20:400, bevorzugt im Verhältnis 1:7:21 bis 1:15:225, besonders bevorzugt im Verhältnis 1:10:100, unterscheiden sowie ein Massenverhältnis der Partikelfraktionen von kleiner über mittlerer zu großer Partikelgröße von 5:1:1, 1:5:1 bis 1:1:5, vorzugsweise zwischen 3:1:1 und 1:4:1 und 1:1:5, weiter bevorzugt zwischen 2:1:1 und 1:3:1 und 1:1:4 aufweisen.

Als besonders vorteilhaft hat sich im Rahmen eines Ausführungsbeispiels ein Verhältnis von 1:2:3 erwiesen, wobei ein besonders bevorzugtes Partikelgrößenverhältnis für Pulvermischungen mit d50-Werten von 0,05 um, 0,5 um und 3 um vorgeschlagen wird. Durch die Mischung verschiedener Partikelgrößen wird eine besonders hohe Packungsdichte des Pulvers im Schlicker sowie eine optimierte Aushärtung unter Berücksichtigung von Lichtstreuung und -absorption erzielt.

Die genannten Perzentilwerte und Massenverhältnisse beziehen sich vorzugsweise auf Pulvermischungen mit den angegebenen zwei oder drei Pulverfraktionen des gleichen Werkstoffs. Pulvermischungen mit Pulverfraktionen mit unterschiedlichen Werkstoffen werden optional mit den gleichen Perzentilwerten und Massenverhältnissen vorgeschlagen, wobei die bevorzugten Bereiche bei Vorliegen physikalischer oder chemischer Wechselwirkungen wie z.B. Abstoßungs- und Anziehungskräfte oder chemischen Reaktionen unter Berücksichtigung der spezifischen Partikeloberfläche und der Oberflächenladung bzw. des elektrischen Potentials/Zetapotentials des Pulvers minimal abweichen.

Die vorgenannte bimodale oder trimodale Partikelgrößenverteilung ermöglicht allein schon ohne weitere Maßnahmen gegenüber einer monomodalen Partikelgrößenverteilung mit nur einem Partikelgrößenbereich z.B. um einen Wert d50 nicht nur einen höheren Füllstoffanteil von über 45% vorzugsweise größer 50% bis hin zu Werten zwischen 70 und 80%, vorzugsweise 75%, sondern in vorteilhafter Weise auch eine Viskositätsreduzierung und auch die Einstellung eines vorgebbaren Viskositätswertes.

Eine weitere bevorzugte Ausführungsform des Schlickers sieht ein optionales, wenn auch nicht notwendiges, Lösungsmittel vor, bei dem der Anteil des Lösungsmittels 3,0 Gew.%, weiter bevorzugt 0,01 Gew.%, bezogen auf den Schlicker nicht übersteigt, um den Füllstoffanteil zu erhöhen sowie die Viskosität und die Aushärteeigenschaften zu verbessern.

Aber auch die vorgeschlagene Mischung von mono-, di- und tri- bzw. multi-funktionellen Binderbestandteilen beeinflusst das Aushärteverhalten und die des Schlickers. Der besondere Vorteil der unterschiedlichen Funktionalitäten liegt in einem verbesserten Aushärteverhalten bei gleichzeitig niedriger Schlickerviskosität, was auf eine erhöhte Mobilität der freien Radikale und Doppelbindungen bei gleichzeitig niedriger Volumenschrumpfung zurückgeführt wird.

Weitere vorteilhafte Ausführungsformen sehen eine Verwendung von weiteren Additiven vor, beispielsweise
- Anti-Haut-Bildnern,
- Additive für eine Spezifizierung einer Sensitivität des Schlickers bei einer vorbestimmten Wellenlänge,
- Additive für ein scherverdünnendes Verhalten,
- Additive für die Einstellung definierbarer Viskositätsbereiche in Abhängigkeit der Scherrate,
- Entbinderungsbeschleuniger

Die Additive dienen allgemein zur Reduzierung der Viskosität, Verbesserung des Benetzungsverhaltens sowohl gegenüber dem Pulver als auch gegenüber anderen Komponenten (z.B. Bauplattform), womit sich auch der Schichtauftrag bei einem Druckprozess verbessern lässt. Zudem sind hiermit auch die Lagerstabilität einer Suspension verbesserbar.

Weitere vorteilhafte Ausführungsformen sehen eine Verwendung von oberflächenmodifizierten oder in der Partikelform konfektionierten keramischen oder metallischen Füllstoffen vor, wodurch die Dispergierung und Stabilisierung der Partikel im Schlicker erleichtert bzw. verbessert werden kann.

Zur Lösung der Aufgabe wird ferner ein **Verfahren** zur Herstellung des zuvor genannten Schlickers vorgeschlagen, umfassend die folgende Verfahrensschritte:
a) Bereitstellung eines Pulvers aus einem anorganischen Werkstoff oder einer Werkstoffmischung, eines Binders, eines Polymerisationsinitiators sowie eines Co-Initiators,
b) Einwaage der Bestandteile des Pulvers und des Binders,
c) Vermischung der eingewogenen Bestandteile und des Binders zu einer Mischung,
d) Eingabe des Polymerisationsinitiators und des Co-Initiators in die Mischung,
e) Vermischung der Mischung aus Pulver und Binder mit dem Polymerisationsinitiator und Co-Initiator zu einem Schlicker.

Dabei wird optional vorgeschlagen, dass die Bereitstellung nach vorgenanntem Schritt a) auch ein optionales Lösungsmittel umfasst sowie die Vermischungen nach Schritt b) und e) das Lösungsmittel mit einbinden, wobei der Anteil des Lösungsmittels 3,0 Gew.%, weiter bevorzugt 0,01 Gew.%, bezogen auf den Schlicker nicht übersteigt.

Ferner wird als bevorzugte Verfahrensausgestaltung vorgeschlagen, dass die Vermischungen in einem Planetenmischer und/ oder in einer Kugelmühle mit oder ohne Mahl-/Mischkugeln in Zeitintervallen erfolgt, wobei die Drehzahl in den und/oder zwischen den einzelnen Zeitintervallen gesteigert und/oder reduziert und/oder konstant gehalten wird und/oder die einzelnen Intervalle durch Pausenzeiten getrennt sind, und/oder ein Dreiwalzwerk zur Homogenisierung eingesetzt wird. Dabei wird zur Erzielung eines besonders guten, d.h. homogenen Mischungsergebnisses weiter bevorzugt vorgeschlagen, dass die genannten Vermischungen mindestens drei Zeitintervalle in der Drehzahlabfolge hoch - niedrig - hoch umfassen und diese durch Pausenzeiten getrennt sind, bevorzugt durch Drehzahlen größer 1.200 U/min, besonders bevorzugt größer 1.500 U/min, in der hohen Drehzahlstufe, und bevorzugt zwischen 500 und 1.200 U/min in der niedrigeren Drehzahlstufe, bevorzugt mit Mischzeiten zwischen 30 und 120 s, besonders bevorzugt zwischen 45 und 90 s, in den einzelnen Stufen und bevorzugt getrennt von Pausenzeiten zwischen 60 und 300 s.

Besonders vorteilhaft ist der vorgeschlagene Verzicht auf ein Lösungsmittel, womit sich der Füllstoffanteil im Schlicker signifikant steigern lässt. Durch eine vorgeschlagene Abstimmung der restlichen Schlicker-Komponenten aufeinander ist dennoch eine hinreichend gute Verarbeitbarkeit im VPP-Verfahren einschließlich der Einstellung einer Viskosität sowie eine ausreichende mechanische Stabilität des Grünkörpers sichergestellt.

Das Aushärteverhalten des Schlickers zu einem Grünkörper wird durch eine Beimischung eines Co-Initiators unterstützt. Dieser ist auf den eigentlichen Photoinitiator und das weitere Bindersystem hinsichtlich dessen Reaktions-/Aushärteverhalten und dessen Eigenschaften, bspw. hinsichtlich dem pH-Wert, abgestimmt und umfasst im Rahmen einer bevorzugten Ausgestaltung aus einer Campherchinon/Amin-Mischung. Konkret haben die Ergebnisse für Campherchinon als Photoinitator gezeigt, dass durch Zugabe des Co-Initiators 4-(Dimethylamino-)Benzonitril in einem Verhältnis von Photoinitator zu Co-Initiator von 3:2 zu einem besonders guten Aushärtungsergebnis im Grünkörper führt.

### Ausführungsbeispiele:

Die Erfindung wird anhand von zwei Ausführungsbeispielen (zwei lösungsmittelfreien Schlickerzusammensetzungen gemäß **Tabelle 1)** näher erläutert. Die angeführten Merkmale hierfür und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden.

**Tabelle 1: Schlickerzusammensetzungen (zwei beispielhafte Zusammensetzungen)**

| Stoff | Bsp. 1 | | Bsp. 2 | |
|---|---|---|---|---|
| | Gew.% | Vol.% | Gew.% | Vol.% |
| 1-Octanol | 0,00 | 0,00 | 0,00 | 0,00 |
| BYK 111 / BYK W 969 | 1,40 | 3, 01 | 1,13 | 2, 62 |
| Keramikpulver: | 79, 25 | 50, 14 | 83,23 | 56, 66 |
| davon d50 = 0,05µm | 14,27 | 9, 02 | 14,98 | 10,20 |
| davon d50 = 0,5µm | 27,74 | 17,55 | 29, 13 | 19,83 |
| davon d50 = 0,3um | 37,24 | 23,57 | 39, 12 | 26, 63 |
| Isobornylacrylat (IBOA) | 6,52 | 16,47 | 5,26 | 14,32 |
| Hexandioldiacrylat (HDDA) | 6, 60 | 16,30 | 5,34 | 14,17 |
| (ethoxyliertes) | 3,26 | 7,32 | 2, 63 | 636 |
| Trimethylolpropantriacrylat (TMPTA) | | | | |
| Campherchinon | 1,79 | 4,54 | 1,44 | 3, 95 |
| 4-(Dimethylamino-) Benzonitril | 1,19 | 2,22 | 0, 96 | 1,93 |
| Summe: | 100,00 | 100,00 | 100,00 | 100,00 |

Bei beiden Ausführungsbeispielen erfolgt vor der eigentlichen Homogenisierung in einem Dreiwalzwerk zunächst eine Einwaage des Keramikpulvers sowie aller weiteren Binder-Bestandteile, mit Ausnahme des Photoinitiators Campherchinon und Co-Initiators 4-(Dimethylamino-)Benzonitril. Die genannten Bestandteile werden in mehreren Intervallen im Bereich von 15 Sekunden bis 2 Minuten vermischt, die jeweils von (mindestens genau so langen) Pausen unterbrochen sind, um ein Abkühlen der Mischung zu ermöglichen. Die Mischung erfolgt in einem Planetenmischer bei hohen Drehzahlen (im Bereich 500 bis 2000 U/min, bevorzugt im Bereich 1000 bis 2000 U/min). Eine weitere Verbesserung der Schlickerhomogenität ist erzielbar, indem dabei eine schrittweise Steigerung der Drehzahl der einzelnen Stufen bis hin zu den genannten hohen Drehzahlen erfolgt, bei Verwendung eines Kunststoff-Mischbechers.

Im Rahmen einer bevorzugten Ausgestaltung der Ausführungsbeispiele wird eine Einbindung von keramischen Mischkugeln (Durchmesser im Bereich von 2 mm) in die Mischung vorgeschlagen, womit sich das erzielbare Mischergebnis weiter verbessern und/oder die erforderliche Mischzeit verkürzen lässt.

In einem abschließenden Misch-Schritt wird der Photoinitiator Campherchinon und der Co-Initiator 4-(Dimethylamino-)Benzonitril hinzugefügt und für maximal 60 Sekunden untergemischt. Durch die nachträgliche Einmischung lässt sich einer vorzeitigen Aushärtung bzw. Verfestigung des Schlickers entgegenwirken. Abschließend wird die Suspension in einem Dreiwalzwerk bearbeitet und damit weiter homogenisiert. Während der Bearbeitungszeit von mehreren Minuten, vorzugsweise zwischen fünf und zehn Minuten wird dabei der Walzenspalt schrittweise reduziert, dadurch Agglomerate aufgelöst und die Homogenität der Schlicker gesteigert.

Die Erfindung weist gegenüber herkömmlichen Schlickersystemen hinsichtlich dem keramischen Füllstoffanteil sowie der Verarbeitungseigenschaften im VPP-Verfahren (Aushärtungsverhalten und Viskosität) verbesserte Eigenschaften auf. Durch den damit einhergehenden geringeren Anteil an Binder und Initiatoren wird das Entbinderverhalten der Bauteile positiv beeinflusst, wodurch sich auch die maximal mögliche Bauteildicke steigern lässt. Dies ist auf eine optimierte Auswahl und Abstimmung des Bindersystems zurückzuführen, wobei die Abstimmung der Anteile von mono-, di- und tri-funktionellem Binder sowie des Initiatorsystems mit Photo- und Co-Initiator vorteilhaft wirkt und es überhaupt ermöglicht, auf ein Lösungsmittel zu verzichten und den Füllstoffanteil zu steigern.

## Patentansprüche

1. Schlicker, umfassend:
a. ein Pulver aus einem anorganischen Werkstoff oder einer anorganischen Werkstoffmischung,
b. einen Binder,
c. einen Polymerisationsinitiator sowie
d. einen Co-Initiator,
wobei
e. der Polymerisationsinitiator ein Photoinitiator ist sowie
f. der Schlicker einen Pulver-Füllstoffanteil zwischen 45 und 75 Vol.% mit einer Partikelgrößenverteilung bezogen auf den jeweiligen Perzentilwert d50 zwischen 0,05 und 20 µm aufweist
**dadurch gekennzeichnet, dass**
g. der Binder sich aus einer Mischung von mono-, di- oder multifunktionellen Monomeren zusammensetzt sowie
h. das Massenverhältnis von mono-, di- oder multifunktionellen Monomeren zwischen 5:1:1, 1:5:1 und 1:1:5 beträgt.

2. Schlicker nach Anspruch 1, **dadurch gekennzeichnet, dass** der Polymerisationsinitiator ein Camph-Derivat, vorzugsweise Campherchinon oder mindestens ein Naphtalin-Derivat oder eine Mischung davon ist oder umfasst.

3. Schlicker nach Anspruch 1 oder 2, **dadurch gekennzeichnet, dass** der Co-Initiator aus der Gruppe der Amine, Benzoate, Nitrile, Phenole, Glycine kommt, vorzugsweise ein Ethyl-4-Dimethylamino Benzoat, 4-Dimethylamino-Benzonitril oder N-Phenylglycin ist oder umfasst.

4. Schlicker nach einem der vorgenannten Ansprüche, umfassend ein Additiv zur Anpassung der Eigenschaften des Schlickers, insbesondere hinsichtlich seiner Rheologie und der Sedimentation.

5. Schlicker nach Anspruch 4, **dadurch gekennzeichnet, dass** das Additiv modifizierten Harnstoff und/oder Polyalkylemin und/ oder Polycaronsäurepolymer und/oder Alkylammoniumsalz eines sauren Copolymers und/oder Salz eines ungesättigten Polyaminamiden und/oder Phosphorsäure und/oder Styrol-Maleinsäureanhydrid-Copolymer, bevorzugt Phosphorsäureester und/ oder hydroxyfunktionelles Alkylammoniumsalz eines sauren Copolymers, umfasst.

6. Schlicker nach einem der vorgenannten Ansprüche, **dadurch gekennzeichnet, dass** das Massenverhältnis von mono-, di- oder multifunktionellen Monomeren zwischen 2:1:1, 1:2:1 und 1:1:2, bevorzugt 2:2:1 beträgt.

7. Schlicker nach einem der vorgenannten Ansprüche, **dadurch gekennzeichnet, dass**
a. das monofunktionelle Monomer monofuktionelle (Meth-) Acrylate, bevorzugt Hydroxyethylmethacrylat (HEMA) oder Isobornylacrylat (IBOA) ist oder umfasst, und/oder
b. das difunktionelle Monomer difunktionelle (Meth-)Acrylate, bevorzugt Hexandioldiacrylat (HDDA), Tetraethylenglykoldiacrylat (TEGDA) oder Tripopylene Glycol Diacrylate (TPGDA) ist oder umfasst, und/oder
c. das multifunktionelle Monomer tri- oder tetrafunktionelle (Meth-)Acrylate, bevorzugt Trimethylolpropantriacrylat (TMPTA) oder ethoxyliertes Trimethylolpropantriacrylat (ETMPTA) ist oder umfasst.

8. Schlicker nach einem der vorgenannten Ansprüche, **dadurch gekennzeichnet, dass** das monofunktionelle Monomer aus Isobornylacrylat (IBOA), das difunktionelle Monomer aus Hexandioldiacrylat (HDDA) und/oder das trifunktionelle Monomer aus Trimethylolpropantriacrylat (TMPTA) besteht

9. Schlicker nach einem der vorgenannten Ansprüche, **dadurch gekennzeichnet, dass** das Pulver aus einer nicht funktionalisierten Oxid- oder Nichtoxidkeramik oder aus einer Mischung dieser mit oder ohne Sinteradditive besteht.

10. Schlicker nach Anspruch 9, **dadurch gekennzeichnet, dass** das Pulver überwiegend aus Al₂O₃, ZrO₂, Y₂O₃, SiO₂, TiO₂, Si₃N₄, SiC, TiN, BC, AlN, Si₃N₄, BN, SiAlON oder einer Mischung dieser oder aus Mischoxiden, -karbiden oder -nitriden besteht.

11. Schlicker nach einem der vorgenannten Ansprüche, **dadurch gekennzeichnet, dass** das Pulver eine Pulvermischung mit zwei Pulverfraktionen umfasst, die zueinander in einem Partikelgrößenverhältnis bezogen auf den jeweiligen Perzentilwert d50 zwischen 1:1,5, vorzugsweise 1:3, und 1:150, vorzugsweise 1:50, stehen.

12. Schlicker nach einem der vorgenannten Ansprüche, **dadurch gekennzeichnet, dass** das Pulver eine Pulvermischung mit drei Pulverfraktionen umfasst, die in einem Partikelgrößenverhältnis bezogen auf die jeweiligen Perzentilwerte d50 der Äquivalenzdurchmesser der Partikel von 1:5:25 bis 1:20:400, bevorzugt im Verhältnis 1:7:21 bis 1:15:225, besonders bevorzugt im Verhältnis 1:10:100, unterscheiden sowie ein Massenverhältnis der Partikelfraktionen von kleiner über mittlerer zu großer Partikelgröße von 5:1:1, 1:5:1 bis 1:1:5, vorzugsweise zwischen 2:1:1, 1:3:1 und 1:1:4, weiter bevorzugt 1:2:3 aufweisen.

13. Schlicker nach einem der vorgenannten Ansprüche, umfassend ein Lösungsmittel, wobei der Anteil des Lösungsmittels 3,0 Gew.%, vorzugsweise 0,01 Gew.% bezogen auf den Schlicker nicht übersteigt.

14. Verfahren zur Herstellung eines Schlickers nach einem der vorgenannten Ansprüche, umfassend die folgenden Verfahrensschritte:
a. Bereitstellung eines Pulvers aus einem anorganischen Werkstoff oder einer Werkstoffmischung, eines Binders, eines Polymerisationsinitiators sowie eines Co-Initiators,
b. Einwaage der Bestandteile des Pulvers und des Binders,
c. Vermischung der eingewogenen Bestandteile und des Binders zu einer Mischung,
d. Eingabe des Polymerisationsinitiators und des Co-Initiators in die Mischung,
e. Vermischung der Mischung aus Pulver und Binder mit dem Polymerisationsinitiator und Co-Initiator zu einem Schlicker.

15. Verfahren nach Anspruch 14, **dadurch gekennzeichnet, dass** die Vermischungen in Schritt c) und e) in einem Planetenmischer und/oder in einer Kugelmühle mit oder ohne Mahl-/Mischkugeln in Zeitintervallen erfolgt, wobei die Drehzahl in den zwischen den einzelnen Zeitintervallen gesteigert und/oder reduziert und/oder konstant gehalten wird und/oder die einzelnen Intervalle durch Pausenzeiten getrennt sind, und/oder ein Dreiwalzwerk zur Homogenisierung eingesetzt wird.
